# EUROPEAN PATENT SPECIFICATION

(11) **EP 1 645 930 B1**
(45) Date of publication and mention of the grant of the patent: **04.09.2019**
(21) Application number: 04292405.0
(22) Date of filing: 11.10.2004
(51) Int. Cl.: G06F 21/64, G06F 21/71

(54) **Method and system for detecting a security violation using an error correction code**
Verfahren und System um eine Sicherheitsverletzung unter Verwendung eines Fehlerkorrekturcodes zu ermitteln
Méthode et système pour détecter une violation de sécurité en utilisant un code de correction d'erreurs

(43) Date of publication of application: 12.04.2006
(73) Proprietor: Texas Instruments Incorporated, Dallas, TX 75265 (US); TEXAS INSTRUMENTS FRANCE, 06271 Villeneuve Loubet Cedex, Nice (FR)
(72) Inventor: Conti, Gregory Remy Philippe, 06570 Saint Paul (FR); Azema, Jerome Laurent, 06270 Villeneuve-Loubet (FR)
(74) Representative: Zeller, Andreas

(56) References cited:
- WO-A-01/53915
- GB-A- 1 573 000
- US-A- 4 646 301
- US-A- 5 491 701
- US-A- 5 610 929
- US-A- 6 101 624
- US-A1- 2004 153 918
- SIMON ROCKLIFF: "Reed Solomon encoder/decoder - C program"[Online] 9 November 2002 (2002-11-09), pages 1-7, XP002321985 Retrieved from the Internet: URL:http://web.archive.org/web/20021109110 359/www.eccpage.com/rs.c> [retrieved on 2005-03-21]
- HASAN M A ET AL: "ALGORITHMS AND ARCHITECTURES FOR THE DESIGN OF A VLSI REED-SOLOMON CODEC" REED-SOLOMON CODES AND THEIR APPLICATIONS, XX, XX, 1994, pages 60-107, XP002055402

## Description

The present subject matter relates to detecting and counteracting attempts to reprogram semiconductor devices that store secure information. More particularly, the subject matter relates to using an error correction code programmed into the semiconductor device to detect attempts at altering the original programmed values.

Manufacturers have become increasingly aware of the need to make mobile communication devices secure. In recent years there has been a significant increase in attempts by unscrupulous individuals to intercept communications from such devices in order to capture identification information unique to each mobile communication device. Once captured, this information may then be used to re-program a similar mobile communication device. The use of such a "cloned" mobile communication device (e.g., a cellular telephone) may result in charges being assessed against the owner of the original device for services utilized by the operator of the cloned device.

Manufacturers of mobile communication devices have attempted to address the problem by utilizing electrically programmable fuses, also known as "e-fuses," to program security related information (e.g., encryption keys and device identification numbers) into semiconductor devices. The use of e-fuses was intended to prevent later re-programming of security related information. But advances in technology and increases in the sophistication of the unscrupulous individuals engaging in the cloning of mobile electronic devices has resulted in the development of techniques for reprogramming e-fuses, something that was previously thought to be either impossible or beyond the abilities of those individuals engaging in such cloning activities.

Accordingly, a system capable of detecting that an e-fuse based or other similar device has been re-programmed, and which is also capable of either restoring the original programmed value or of preventing operation of the reprogrammed device is desirable.

Prior art document US2004/0153918-A1 discloses a control program to be stored in a program memory of a device including a protection program with an error correction code added thereto as a portion to be protected from tampering.

Prior art document XP2321985 discloses an encoder/decoder for Reed-Solomon codes wherein encoding is in systematic form, decoding via the Berlekamp iterative algorithm.

Prior art document US5610929 discloses an Error Correction Code (ECC) decoder able to detect a non error, a correctable error or an uncorrectable error state and to report to a controller after user data is read.

The problems noted above are addressed in large part by a system and method for detecting a security violation using an error correction code. From a first aspect, the invention resides in a method of detecting a security violation comprising: reading a codeword from a secure memory device, the codeword comprising security related data and an error correction code (ECC) associated with the secure data; deriving an error location polynomial (ELP) from the codeword; determining a total number of codeword errors from the ELP; asserting a security violation signal if the total number of codeword errors exceeds a maximum error threshold; and preventing access to the secure data of the codeword on assertion of a security violation signal.

Yet further illustrative embodiments may be a method as described above used in a mobile communication device.

From a further aspect, the invention resides in a A computing system, comprising a security controller arranged to control access to or to disable at least partially, the computing system on assertion of a security violation signal; a non-volatile secure memory that stores a codeword comprising security related data and an error correction code (ECC), the ECC associated with the security related data; an ECC decoder coupled to the non-volatile secure memory that reads the codeword from the non-volatile memory and calculates an error location polynomial (ELP) from the codeword; and an integrity analyzer coupled to the ECC decoder and the security controller arranged to derive a number of codeword errors from the ELP, wherein a maximum error threshold is defined for the computing system and wherein the integrity analyzer signals a security violation to the security controller if the number of codeword errors exceeds the maximum error threshold.

Yet further illustrative embodiments may be a mobile communication device comprising a radio frequency (RF) transceiver having one or more modes of operation, and a computing system as described above, associated with the transceiver.

For a detailed description of the preferred embodiments of the invention, reference will now be made to the accompanying drawings in which:
Figure 1 illustrates a computing system constructed in accordance with at least some embodiments of the invention;
Figure 2 illustrates a data security system constructed in accordance with at least some embodiments of the invention; and
Figure 3 illustrates a method for detecting and counteracting an attack in accordance with at least some embodiments of the invention.

Certain terms are used throughout the following claims and discussion to refer to particular system components. This document does not intend to distinguish between components that differ in name but not function. In the following discussion and in the claims, the terms "including" and "comprising" are used in an open-ended fashion, and thus should be interpreted to mean "including but not limited to...." Also, the term "couple" or "couples" is intended to mean either an indirect or direct electrical connection. Thus, if a first device couples to a second device, that connection may be through a direct electrical connection, or through an indirect electrical connection via other devices and connections. Additionally, the term "system" refers to a collection of two or more parts and may be used to refer to a computer system or a portion of a computer system.

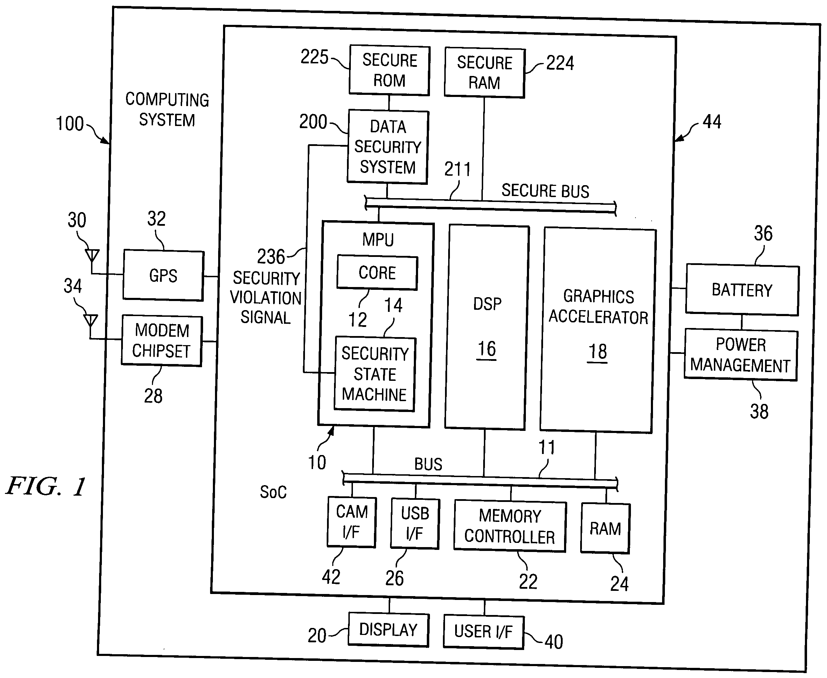

Figure 1 shows a computing system 100 constructed in accordance with at least some embodiments of the invention. The computing system 100 may comprise a multiprocessing unit (MPU) 10 coupled to various other system components by way of a data and instruction bus (Bus) 11. The MPU 10 may comprise a processor core (Core) 12 that executes applications, possibly by having a plurality of processing pipelines. The MPU 10 may further comprise a security state machine (SSM) 14, which aids in allowing the computing system 100 to enter a secure mode for execution of secure software, and which further monitors operation during the secure mode to ensure secure operation.

The computing system 100 may further comprise a digital signal processor (DSP) 16 that aids the MPU 10 by performing task-specific computations, such as graphics manipulation and speech processing. A graphics accelerator 18 may couple both to the MPU 10 and DSP 16 by way of the Bus 11. The graphics accelerator 18 may perform necessary computations and translations of information to allow display of information, such as on display device 20. The computing system 100 may further comprise a memory controller (MEM CNTL) 22 coupled to random access memory (RAM) 24 by way of the Bus 11. The memory controller 22 may control access to and from the RAM 24 by any of the other system components such as the MPU 10, the DSP 16 and the graphics accelerator 18.

The computing system 100 may also comprise secure random access memory (Secure RAM) 224 and secure read-only memory (Secure ROM) 225. The secure RAM 224 may couple to MPU 10 by way of the secure data and instruction bus (Secure Bus) 211. The secure ROM may couple to the ROM security system 200, which in turn may couple to the MPU 10 by way of the secure bus 211. The MPU 10 may access the secure memories while operating in a secure mode. The RAM 24 and secure RAM 224 may be any suitable random access memory, such as synchronous RAM or RAMBUS ™-type RAM. The secure ROM 225 may be any suitable read-only memory that uses some form of a program one time, read many times technology, such as an electrical fuse or "E-fuse" ROM (e.g., Texas Instruments JBP28S42 Bi-Polar PROM).

The computing system 100 may further comprise a USB interface (USB I/F) 26 coupled to the various system components by way of the Bus 11. The USB interface 26 may allow the computing system 100 to couple to and communicate with external devices.

The security state machine 14, preferably a hardware-based state machine, monitors system parameters and allows the secure mode of operation to initiate such that secure programs may execute from and access a portion of the RAM 24, the secure RAM 224, and/or the secure ROM 225. Having this secure mode is valuable for any type of computer system, such as a laptop computer, a desktop computer, or a server in a bank of servers. However, in accordance with at least some embodiments of the invention, the computing system 100 may be a mobile computing system, e.g., a cellular telephone, personal digital assistant (PDA), text messaging system, and/or a computing device that combines the functionality of a messaging system, personal digital assistant and a cellular telephone. Thus, some embodiments may comprise a modem chipset 28 coupled to an external antenna 34 and/or a global positioning system (GPS) circuit 32 likewise coupled to an external antenna 30.

Because the computing system 100 in accordance with at least some embodiments is a mobile device, computing system 100 may also comprise a battery 36 providing power to the various processing elements, possibly controlled by a power management unit 38. A user may input data and/or messages into the computing system 100 by way of the user interface (User I/F) 40, such as a keyboard, keypad, or touch panel. Because many cellular telephones also comprise the capability of taking digital still and video pictures, in some embodiments the computing system 100 may comprise a camera interface (CAM I/F) 42 which may enable camera functionality, possibly by coupling the computing system 100 to a charge-coupled device (CCD) array (not shown) for capturing digital images.

In accordance with at least some embodiments of the invention, many of the components illustrated in Figure 1, while possibly available as individual integrated circuits, are preferably integrated or constructed onto a single semiconductor die 44. Thus, the MPU 10, digital signal processor 16, memory controller 22 and RAM 24, along with some or all of the remaining components, are preferably integrated onto a single semiconductor die, and thus may be integrated into a computing device 100 as a single packaged component. Having multiple devices integrated onto the single semiconductor die 44, especially devices comprising a MPU 10 and RAM 24, may be referred to as a system-on-a-chip (SoC) or a megacell.

The security state machine 14 may also monitor signals from other components of the computing system 100 that may detect security violations necessitating action by the security state machine 14. The data security system 200 illustrated in Figure 1 may provide such an input to the security state machine 14. This input may be in the form of a security violation signal 236 that indicates to the security state machine 14 that the data security system 200 has detected an alteration of the data stored in the secure ROM 225. The alteration may have been caused by a malicious user attempting to reprogram the secure ROM 225 using, for example, a stolen identification number from another computing system such as a cellular telephone. Such reprogramming is sometimes referred to as "cloning."

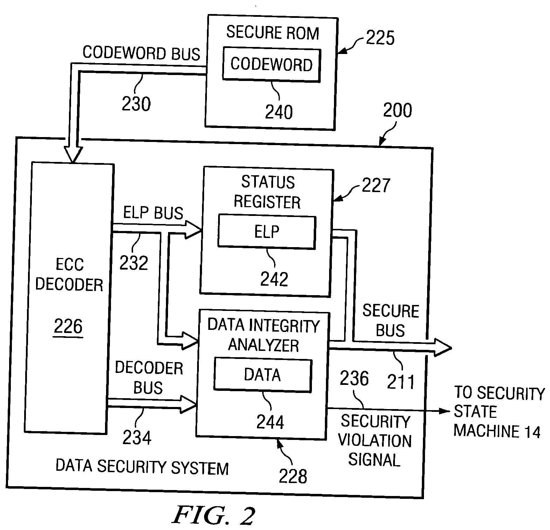

A detailed illustration of the data security system 200, in accordance with at least some embodiments, is shown in Figure 2. Secure ROM 225 couples to ECC decoder 226 via codeword bus 230. The ECC decoder 226 reads a codeword 240 from the secure ROM 225 in response to a data read request from another component of the computing system 100 (*e.g.,* MPU 10). The codeword 240 may comprise data and an error correction code (ECC) associated with the data. A Bose-Chaudhuri-Hocquenghem (BCH) or other similar error correction code may be preferred since it results in a value for the codeword 240 comprising a distribution of bit settings comparable to a pseudo random number generator. Because of this property, a change in value of a single data bit would require a corresponding change, on average, of half the number of ECC bits.

The ECC decoder 226 couples to the data integrity analyzer 228 via the decoder bus 234, and to both the data integrity analyzer 228 and the status register 227 via the error location polynomial bus (ELP bus) 232. The data integrity analyzer also may couple to the security state machine 14 via security violation signal 236 (Figure 1). The error location polynomial (ELP) 242 may be derived from codeword 240 by ECC decoder 226 and stored in the status register 227 where it can be accessed by the data integrity analyzer 228 via the ELP bus 232. The status register may also couple to other components within the computing system 100 (e.g., DSP 16) via secure bus 211, and the error location polynomial 242 may thus be accessed by these components. Likewise, ECC decoder 226 may decode data from the codeword 240 and store the resulting data 244 in data integrity analyzer 228. Data integrity analyzer 228 may also couple to other components within the computing system 100 via secure bus 211 so as to provide access to the data 244.

In accordance with at least some embodiments, the ECC decoder 226 may use a Berlekamp-Massey algorithm to derive the error location polynomial 242 from the codeword 240. The resulting error location polynomial 242 characterizes errors that exist in the codeword 240. The degree of the error location polynomial 242 is indicative of the number of errors, and the error location polynomial 242 may be used to generate the information necessary to locate the specific bits in error within the codeword 240. The number of data bits and the number of ECC bits control the maximum number of bits that may be thus corrected. For example, a codeword 240 comprising 320 data bits and 63 BCH encoded ECC bits will result in the ability to correct up to a maximum of 7 bits in error within the codeword 240.

The data integrity analyzer 228 uses the error location polynomial 242 stored in status register 227 to determine if an error has been detected. If an error is detected, the degree of the error location polynomial 242 will be non-zero and will reflect the number of errors detected. Thus, if the codeword 240 contains 3 bits in error, the error location polynomial 242 generated from the codeword 240 by the ECC decoder 226 will be a third order polynomial. If an error is detected, the data integrity analyzer 228 may signal the security state machine 14 via security violation signal 236. The security state machine 14 may take appropriate action in response to the asserted security violation signal 236. Such action that may include, for example, denying access to the requested data, disabling selected features of the computing system 100, and completely disabling the computing system 100.

If a detected error is correctable, the actual bit location of the error within the codeword 240 may be determined, for example, by performing a Chien search on the error location polynomial 242. The choice for the maximum number of correctable errors may be affected by a number of factors. In accordance with at least some embodiments, the number may be chosen so as to allow for a number of failures of individual bits within the secure ROM 225. Such failures, if below the maximum number of correctable bits chosen, would be corrected "on-the-fly" during operation and would not require any special intervention during production testing of the part by the manufacturer. Allowing for production failures within the secure ROM 225 reduces overall production costs by increasing the number of usable ROMs without imposing additional testing or repair requirements. In addition, later reliability failures of the secure ROM 225 would also be automatically corrected during normal operation, reducing the number of ROMs that may cause the computing system 100 to fail after being put into operation. Thus, for example, if the data security system 200 is designed with a chosen maximum number of correctable errors equal to 7, the computing system 100 would continue to operate even if there were five factory bit failures and two later operational bit failures within the secure ROM 225. The data security system 200 would correct the errors as the codeword 240 was read and present the correct data 244 on the secure bus 211 for use by other components of the computing system 100.

The choice of a small number of correctable errors, such as 7, allows these errors to be distinguished from attempts at altering the contents of the secure ROM 225. The choice of error correction code (such as the BCH code) results in the need to change a large number of error correction bits if a data bit is altered in order for the ECC decoder 226 to not detect an error. This may significantly increase the difficulty of altering the contents of the secure ROM 225. This increase in difficulty may be due to the difficulty in reprogramming large numbers of bits within the secure ROM 225 without damaging the ROM.

The difficulty in reprogramming secure ROM 225 may also be due to the "one-way" nature of programming bits in use in many programmable ROMs. In accordance with at least some embodiments, the secure ROM 225 may comprise an E-fuse based ROM, wherein a binary "1" may be programmed by "burning" a fuse. Burning of the fuse may comprise passing an electrical current through the fuse such that the material used to form the fuse is disrupted, producing a physical interruption that substantially prevents an electrical signal from passing through the fuse. In such an embodiment, a binary "0" may be programmed by not burning the fuse, and reprogramming the contents of secure ROM 225 may be limited to burning fuses of bits not already programmed as binary a binary "1". Thus a malicious user that wishes to alter the contents of the secure ROM 225 would have to chose a value that, when compared to the value already programmed, would require only that additional binary "1's" be added to the existing value. The choice of a BCH error correction code can significantly limit the number of values available and thus make this task extremely difficult.

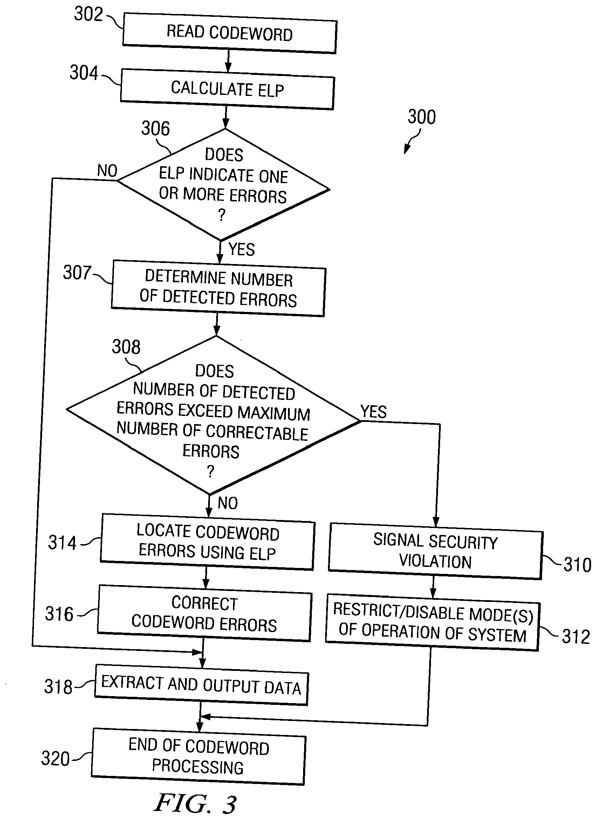

A method 300 for using an error correction code to detect security violations, in accordance with at least some embodiments, is illustrated in Figure 3. Referring to both Figures 2 and 3, the codeword 240 comprising an error correction code and data is first read as shown in block 302. A BCH error correction code may be preferred for reasons previously described. The error location polynomial 242 is then calculated as shown in block 304 in order to be able to determine if one or more errors have occurred within the codeword 240 read from secure ROM 225 as shown in block 306. If there are no errors detected, the data 244 is extracted from the codeword 240 and output to secure bus 211 as shown in block 318, ending the processing of the codeword 240 in block 320.

If the error location polynomial 242 indicates the presence of one or more errors in the codeword 240, the number of detected errors is determined in block 307 and is then compared with the maximum number of correctable errors, as shown in block 308. If the number of detected errors is greater than the maximum number of correctable errors, a security violation is signaled in block 310. As shown in block 312 and in accordance with at least some embodiments, one or more modes of operation of a system implementing the method 300 may be restricted or disabled, or the entire system may be disabled altogether in response to the assertion of the security violation signal 236. Such modes of operation may include, for example, a communication mode, an address book mode, and a camera mode. A restriction of a mode of operation of the system may include, for example, disabling a radio frequency transceiver section of a cellular telephone, thus preventing the use of the system for telephonic communication (i.e., disabling the communication mode). Other modes such as, for example, the address book mode and the camera mode may continue to be accessible by the user. Once a mode of operation of the system is restricted or disabled, processing of the codeword 240 ends in block 320.

If the number of detected errors is not found to be greater than the maximum number of correctable errors (block 308), the error location polynomial 242 is then used to locate one or more bits in error within the codeword 240 as shown in block 314. The located bits are then corrected in block 316. Once the codeword 240 is corrected, the data 244 is extracted from the codeword 240 and output to the secure bus 211 as shown in block 318. Once the data 244 has been output to the secure bus 211, processing of the codeword 240 ends in block 320. It should be noted that although the embodiments described signal a security violation when the number of detected errors exceeds the maximum number of correctable errors, other embodiments may signal a security violation if the number of detected errors exceeds a different threshold value that is less than the maximum number of correctable errors.

The above disclosure is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

## Claims

1. A method of detecting a security violation comprising the steps of:
reading a codeword (240) from a secure memory device (225), the codeword comprising security related data and an error correction code (ECC) associated with the secure data;
deriving an error location polynomial (ELP) from the codeword;
determining a total number of codeword errors from the ELP; and
detecting if there is a malicious attempt to alter the data by determining if the total number of codeword errors exceeds a maximum error threshold; and
preventing access to the secure data of the codeword (240) if a malicious attempt to alter the data is detected,
**characterised in that**:
the maximum error threshold equals a maximum number of correctable errors.

2. The method of claim 1, further comprising locating and correcting a codeword error if the total number of codeword errors does not exceed the maximum error threshold, the codeword error located and corrected using the ELP.

3. The method of claim 2, wherein the maximum error threshold equals a maximum number of correctable errors.

4. The method of any preceding claim, wherein the ECC comprises a Bose-Chaudhuri-Hocquenghem encoded ECC; and wherein deriving the ELP comprises using a Berlekamp-Massey algorithm.

5. A method according to any preceding claim for use in a mobile communications device.

6. A computing system for detecting a security violation, comprising:
a security controller (14) arranged to control access to or to disable at least partially, the computing system on assertion of a security violation signal;
a non-volatile secure memory (225) that stores a codeword comprising security related data and an error correction code (ECC), the ECC associated with the security related data;
an ECC decoder (226) coupled to the non-volatile secure memory (225) that reads the codeword (240) from the non-volatile secure memory and calculates an error location polynomial (ELP) from the codeword (240);
an integrity analyzer (228) coupled to the ECC decoder (226) and the security controller (14) arranged to derive a number of codeword errors from the ELP, wherein a maximum error threshold is defined for the computing system as indicating a malicious attempt to alter the data; and
wherein the integrity analyzer signals a security violation to the security controller if the number of codeword errors exceeds the maximum error threshold,
**characterised in that**:
the maximum error threshold equals a maximum number of correctable errors.

7. The computing system of claim 6, wherein the security controller resets the computing system when the integrity controller signals the security violation.

8. The computing system of claims 6 or 7, wherein a request for the data by a component within the computing system triggers the codeword read and the ELP calculation by the ECC decoder, and triggers the derivation of the number of codeword errors by the integrity analyzer; and
wherein the security controller causes the request for the data to be denied when the integrity controller signals the security violation.

9. The computing system any of claims 6 to 8, wherein the integrity analyzer further uses the ELP to locate and correct a codeword error if the number of codeword errors does not exceed the maximum error threshold.

## Patentansprüche

1. Verfahren zum Ermitteln einer Sicherheitsverletzung, umfassend die folgenden Schritte:
Auslesen eines Codeworts (240) von einer sicheren Speichervorrichtung (225), wobei das Codewort sicherheitsbezogene Daten und einen Fehlerkorrekturcode (ECC) umfasst, der den sicheren Daten zugeordnet ist;
Ableiten eines Fehlerlokalisierungspolynoms (ELP) aus dem Codewort;
Bestimmen einer Gesamtzahl von Codewortfehlern aus dem ELP; und
Ermitteln, ob ein bösartiger Versuch vorliegt, die Daten zu ändern, durch Bestimmen, ob die Gesamtzahl der Codewortfehler einen Schwellenwert für die maximale Fehleranzahl überschreitet; und
Verhindern des Zugriffs auf die sicheren Daten des Codeworts (240), wenn ein bösartiger Versuch, die Daten zu ändern, ermittelt wird,
**dadurch gekennzeichnet, dass**:
der Schwellenwert für die maximale Fehleranzahl gleich einer maximalen Anzahl von korrigierbaren Fehlern ist.

2. Verfahren nach Anspruch 1, ferner umfassend das Lokalisieren und Korrigieren eines Codewortfehlers, wenn die Gesamtzahl der Codewortfehler den Schwellenwert für die maximale Fehleranzahl nicht überschreitet, wobei der Codewortfehler unter Verwendung des ELP lokalisiert und korrigiert wird.

3. Verfahren nach Anspruch 2, wobei der Schwellenwert für die maximale Fehleranzahl gleich einer maximalen Anzahl von korrigierbaren Fehler ist.

4. Verfahren nach einem der vorhergehenden Ansprüche, wobei der ECC einen Bose-Chaudhuri-Hocquenghem-codierten ECC umfasst; und wobei das Ableiten des ELP die Verwendung eines Berlekamp-Massey-Algorithmus umfasst.

5. Verfahren nach einem der vorhergehenden Ansprüche zur Verwendung in einer mobilen Kommunikationsvorrichtung.

6. Computersystem zum Ermitteln einer Sicherheitsverletzung, umfassend:
Sicherheitssteuerung (14), die angeordnet ist, um den Zugriff auf das Computersystem bei der Behauptung eines Sicherheitsverletzungssignals zu kontrollieren oder zumindest teilweise zu deaktivieren;
nichtflüchtigen sicheren Speicher (225), der ein Codewort speichert, das sicherheitsbezogene Daten und einen Fehlerkorrekturcode (ECC) umfasst, wobei der ECC den sicherheitsbezogenen Daten zugeordnet ist;
ECC-Decoder (226), der mit dem nichtflüchtigen sicheren Speicher (225) gekoppelt ist, der das Codewort (240) aus dem nichtflüchtigen sicheren Speicher ausliest und ein Fehlerlokalisierungpolynom (ELP) aus dem Codewort (240) berechnet;
Integritätsanalysator (228), der mit dem ECC-Decoder (226) und der Sicherheitssteuerung (14) gekoppelt ist und dafür ausgelegt ist, eine Anzahl von Codewortfehlern aus dem ELP abzuleiten, wobei ein Schwellenwert für die maximale Fehleranzahl für das Computersystem definiert ist, die einen bösartigen Versuch, die Daten zu ändern, anzeigt; und
wobei der Integritätsanalysator der Sicherheitssteuerung eine Sicherheitsverletzung signalisiert, wenn die Anzahl der Codewortfehler den Schwellenwert für die maximale Fehleranzahl überschreitet,
**dadurch gekennzeichnet, dass**:
der Schwellenwert für die maximale Fehleranzahl gleich einer maximalen Anzahl von korrigierbaren Fehlern ist.

7. Computersystem nach Anspruch 6, wobei die Sicherheitssteuerung das Computersystem zurücksetzt, wenn die Integritätssteuerung die Sicherheitsverletzung signalisiert.

8. Computersystem nach Anspruch 6 oder 7, wobei eine Anforderung der Daten durch eine Komponente im Computersystem das Auslesen des Codeworts und die ELP-Berechnung durch den ECC-Decoder auslöst, und die Ableitung der Anzahl der Codewortfehler durch den Integritätsanalysator auslöst; und wobei die Sicherheitssteuerung bewirkt, dass die Anforderung der Daten verweigert wird, wenn die Integritätssteuerung die Sicherheitsverletzung signalisiert.

9. Computersystem nach einem der Ansprüche 6 bis 8, wobei der Integritätsanalysator ferner das ELP verwendet, um einen Codewortfehler zu lokalisieren und zu korrigieren, wenn die Anzahl der Codewortfehler den Schwellenwert für die maximale Fehleranzahl nicht überschreitet.

## Revendications

1. Procédé de détection d'une violation de la sécurité comprenant les étapes consistant :
à lire un mot codé (240) à partir d'un dispositif de mémoire sécurisé (225), le mot codé comprenant des données liées à la sécurité et un code de correction d'erreurs (ECC) associé aux données sécurisées ;
à dériver un polynôme de localisation d'erreur (ELP) à partir du mot codé ;
à déterminer le nombre total d'erreurs de mot codé à partir du polynôme ELP ; et
à détecter s'il y a une tentative malveillante de modifier les données en déterminant si le nombre total d'erreurs de mot codé dépasse un seuil d'erreur maximal ; et
à empêcher l'accès aux données sécurisées du mot codé (240) si une tentative malveillante de modifier les données est détectée,
**caractérisé en ce que**
le seuil d'erreur maximal est égal à un nombre maximal d'erreurs pouvant être corrigées.

2. Procédé selon la revendication 1, consistant en outre à localiser et à corriger une erreur de mot codé si le nombre total d'erreurs de mot codé ne dépasse pas le seuil d'erreur maximal, l'erreur de mot codé étant localisée et corrigée à l'aide du polynôme ELP.

3. Procédé selon la revendication 2, dans lequel le seuil d'erreur maximal est égal à un nombre maximal d'erreurs pouvant être corrigées.

4. Procédé selon l'une quelconque des revendications précédentes, dans lequel le code ECC comprend un code ECC codé par Bose-Chaudhuri-Hocquenghem ; et dans lequel le fait de dériver le polynôme ELP consiste à utiliser un algorithme de Berlekamp-Massey.

5. Procédé selon l'une quelconque des revendications précédentes, destiné à être utilisé dans un dispositif de communication mobile.

6. Système informatique pour détecter une violation de la sécurité comprenant :
un dispositif de contrôle de sécurité (14) conçu pour contrôler l'accès au système informatique ou pour désactiver au moins partiellement ce dernier lors de l'assertion d'un signal de violation de la sécurité ;
une mémoire sécurisée non volatile (225) qui stocke un mot codé comprenant des données liées à la sécurité et un code de correction d'erreurs (ECC), le code ECC étant associé aux données liées à la sécurité ;
un décodeur de code ECC (226) couplé à la mémoire sécurisée non volatile (225) qui lit le mot codé (240) à partir de la mémoire sécurisée non volatile et calcule un polynôme de localisation d'erreur (ELP) à partir du mot codé (240) ;
un analyseur d'intégrité (228) couplé au décodeur de code ECC (226) et au dispositif de contrôle de sécurité (14) conçu pour dériver un certain nombre d'erreurs de mot codé à partir du polynôme ELP, dans lequel un seuil d'erreur maximal est défini pour le système informatique comme indiquant une tentative malveillante de modifier les données ; et
dans lequel l'analyseur d'intégrité signale une violation de la sécurité au dispositif de contrôle de sécurité si le nombre d'erreurs de mot codé dépasse le seuil d'erreur maximal, **caractérisé en ce que** :
le seuil d'erreur maximal est égal à un nombre maximal d'erreurs pouvant être corrigées.

7. Système informatique selon la revendication 6, dans lequel le dispositif de contrôle de sécurité réinitialise le système informatique lorsque le dispositif de contrôle d'intégrité signale la violation de la sécurité.

8. Système informatique selon la revendication 6 ou 7, dans lequel une demande de données par un composant dans le système informatique déclenche la lecture de mot codé et le calcul de polynôme ELP par le décodeur de code ECC et déclenche la dérivation du nombre d'erreurs de mot codé par l'analyseur d'intégrité ; et
dans lequel le dispositif de contrôle de sécurité provoque le refus de la demande de données lorsque le dispositif de contrôle d'intégrité signale la violation de la sécurité.

9. Système informatique selon l'une quelconque des revendications 6 à 8, dans lequel l'analyseur d'intégrité utilise en outre le polynôme ELP pour localiser et corriger une erreur de mot codé si le nombre d'erreurs de mot codé ne dépasse pas le seuil d'erreur maximal.
